# EUROPÄISCHE PATENTSCHRIFT

(11) **EP 0 927 076 B1**
(45) Veröffentlichungstag und Bekanntmachung des Hinweises auf die Patenterteilung: **25.09.2002**
(21) Anmeldenummer: 98936106.8
(22) Anmeldetag: 08.06.1998
(51) Int. Cl.: B01J 38/00

(54) **VERFAHREN ZUR ERNEUTEN AKTIVIERUNG WABENFÖRMIG AUFGEBAUTER KATALYSATORELEMENTE FÜR DIE ENTSTICKUNG VON RAUCHGASEN**
METHOD FOR RENEWED ACTIVATION OF HONEYCOMB-SHAPED CATALYST ELEMENTS FOR DENITRATING FLUE GASES
PROCEDE POUR L'ACTIVATION RENOUVELEE D'ELEMENTS CATALYTIQUES ALVEOLAIRES EN VUE DE LA DENITRURATION DES GAZ DE FUMEE

(30) Priorität: 06.06.1997 DE 19723796
(43) Veröffentlichungstag der Anmeldung: 07.07.1999
(73) Patentinhaber: SaarEnergie GmbH, 66111 Saarbrücken (DE)
(72) Erfinder: DÖRR, Heinz-Kurt, D-66386 St. Ingbert (DE); KOCH, Georg, D-66839 Schmelz (DE); BASTUCK, Walter, D-66571 Eppelborn-Wiesbach (DE)
(86) Internationale Anmeldenummer: DE9801540
(87) Internationale Veröffentlichungsnummer: WO98055230

(56) Entgegenhaltungen:
- EP-A- 0 824 973
- WO-A-95/20434
- PATENT ABSTRACTS OF JAPAN vol. 008, no. 138 (C-231), 27. Juni 1984 & JP 59 049849 A (NIHON GAISHI KK;OTHERS: 01), 22. März 1984
- PATENT ABSTRACTS OF JAPAN vol. 007, no. 108 (C-165), 11. Mai 1983 & JP 58 030345 A (MITSUBISHI JUKOGYO KK), 22. Februar 1983

## Beschreibung

Die Erfindung betrifft ein Verfahren zur erneuten Aktivierung wabenförmig aufgebauter Katalysatorelemente für die Entstickung von Rauchgasen aus fossil befeuerten Kesselanlagen, insbesondere aus kohlebefeuerten Großkraftwerkskesselanlagen, bei dem die Katalysatorelemente zunächst einer mechanischen Reinigung, anschließend einer zweistufigen naßchemischen Reinigung mittels Wasser und dann einer Trocknung mittels Luft unterzogen werden.

Die Rauchgase aus fossilbefeuerten Kesselanlagen, insbesondere aus kohlebefeuerten Großkraftwerkskesselanlagen, müssen aus Gründen des Umweltschutzes einer umfassenden Reinigung, daß heißt in erster Linie einer Entstaubung, einer Entschwefelung und einer Entstickung unterzogen werden.

Dabei wird zumindest im Kraftwerksbereich meist zunächst die Entstickung, dann die Entstaubung mittels Elektrofilter und schließlich die Entschwefelung in einem Naßwäscher durch Reaktion der im Wäscher sich bildenden SO₄²⁻ - lonen mit Ca ²⁺ - Ionen zu CaSO ₄ durchgeführt.

Die Entstickung der Rauchgase erfolgt bei Temperaturen zwischen etwa 300 - 400 °C durch Reaktion der Stickoxide (Noₓ) mit Ammoniak zu molekularem Stickstoff und Wasser.

Zur Erreichung zufriedenstellender Umsetzungsgeschwindigkeiten und Umsetzungswirkungsgrade ist es dabei unerläßlich, daß die Entstickungsreaktionen durch geeignete Katalysatoren unterstützt werden.

Beispielsweise besteht der in dem von der Anmelderin betriebenen 770 -MW Steinkohlekraftwerk Bexbach integrierte Entstickungsreaktor aus vier Katalysatorebenen, die mit insgesamt drei Katalysatorlagen bestückt sind. Jede Katalysatorlage wiederum besteht aus einer Anzahl einzelner Katalysatorelemente in der Größenordnung von etwa 1,4 m Höhe, 2,5 m Breite und 1,15 m Tiefe. Diese Katalysatorelemente sind wabenförmig aufgebaut mit einer Querschnittsfläche von etwa 10 mm² pro Wabe. Im Kraftwerk Bexbach sind wolframhaltige Katalysatoren auf Titandioxidbasis mit einer weiteren Aktivkomponente Vanadiumpentoxid im Einsatz. Zur Verbesserung der mechanischen Belastbarkeit der Elemente werden bei der Fertigung der titandioxidhaltigen Grundmasse calcium-aluminium-silicatische Stützfasern zugemischt.

Im Betrieb des Kraftwerks Bexbach hat sich gezeigt, daß die Aktivität der Katalysatorenelemente bereits nach etwa zwanzigtausend Betriebsstunden sehr stark zurückgegangen ist. Neben der dadurch verringerten Reduktion der Stickoxyde führt eine derart verringerte Aktivität zu einem stark erhöhten Ammoniakschlupf, daß heißt, das den Entstickungsreaktor verlassende Rauchgas enthält noch merkliche Mengen Ammoniak, die in nachgeschalteten Anlagenteilen, wie z. B. im Luftvorwärmer zu Verschmutzungen durch Ammoniumsalzbildung sowie zu einer Verunreinigung der Flugasche führen können.

Bisher ist es daher gängige Praxis, verbrauchte Katalysatorelemente, deren Aktivität beispielsweise auf weniger als ein Drittel der Ursprungsaktivität zurückgegangen ist, durch neue zu ersetzen, oder nachträglich eine weitere Lage neuer Katalysatorelemente vorzusehen. Neben Problemen mit der Entsorgung der verbrauchten Elemente entstehen durch die Neubestückung für den Kraftwerksbetreiber erhebliche Kosten. Beispielsweise kostet derzeit die Neubestückung einer Ebene im Reaktor des Kraftwerks Bexbach etwa 6 Mio. DM.

Daher ist es auch früher schon naheliegend gewesen, Verfahren zur Reinigung benutzter Katalysatorelemente zu entwickeln. Ein solches Verfahren wird zum Beispiel in der Patentschrift JP 59 049 849 offenbart. Beschrieben wird ein Verfahren zur erneuten Aktivierung wabenförmig aufgebauter Katalysatorelemente in drei Stufen. Dabei wird in einer ersten Stufe das ausgebaute Katalysatorelement mit Hilfe von Druckluft oder Unterdruck von Staub gereinigt. In den beiden anschließenden Stufen werden die Katalysatorelemente vertikal in Tanks getaucht, in denen sich Wasser befindet. Dabei sollen die auf der Katalysatoroberfläche befindlichen Alkalimetalle und sonstigen Kalkablagerungen gelöst und mit dem abfließenden Wasser entfernt werden. Allerdings besitzt dieses Verfahren einige gravierende Nachteile, weshalb es auch nur selten angewandt wird:
Gewöhnliches Leitungswasser und sogar die Feuchte in der Luft kann zuviel Calciumsalze enthalten, die im Behandlungsfall mit Schwefeltrioxid bzw. Schwefelsäure aus dem Katalysatorstaub zur Gipsausfällung und damit zur Bildung einer inerten Oberflächensperrschicht ("Vermörtelung") auf den zu reinigenden Katalysatorelementen führen kann. Dadurch wird die Reinigungsleistung des Verfahrens stark herabgesetzt. Darüber hinaus besitzt die in JP 59 049 849 offenbarte Methode des Eintauchens der Katalysatorelemente in Tanks den gravierenden Nachteil, daß dadurch auch die äußeren Metallrahmen der Katalysatorelemente mit dem Wasser in längeren Kontakt kommen. Da sich im Katalysator immer Schwefeldioxid aus dem Filter-Prozeß befindet, bildet sich in dem Wasserbad Schwefelsäure, die das Herauslösen von Eisenionen aus dem Katalysator-Rahmen zur Folge haben. Dabei spielt eine Hauptrolle die Verweilzeit der Reinigungsflüssigkeit in den Katalysatorwaben.

Der Erfindung liegt daher die Aufgabe zugrunde, ein Verfahren zu entwickeln, durch das verbrauchte Katalysatorelemente reaktiviert und damit erneut zur Rauchgasentstickung eingesetzt werden können.

Diese Aufgabe wird gemäß der Erfindung dadurch gelöst, daß jedes Katalysatorelement in ausgebautem Zustand einzeln behandelt wird, wobei die mechanische Reinigung mittels ölund wasserfreier Druckluft erfolgt und die naßchemische Reinigung mittels voll entsalztem Wasser durchgeführt wird, wobei in einer ersten Stufe jedes Katalysatorelement mittels voll entsalztem Wasser ausgespritzt und dann in einer zweiten Stufe mittels voll entsalztem Druckwasser nachgespült wird.

Versuche bei der Anmelderin haben gezeigt, daß verbrauchte Katalysatorelemente mit einer Restaktivität unter 50 % der Neuaktivität erneut auf über 83 % der Neuaktivität gebracht werden können. Die auf diese Weise neuaktivierten Katalysatorelemente können nochmals eingesetzt werden, wodurch sich deren Standzeit mit entsprechenden Kostensenkungen für den Kraftwerksbetreiber deutlich erhöht.

Aufgrund der in der ersten Behandlungsstufe gemäß der Erfindung vorgesehenen Reinigung der Katalysatorelemente mittels Druckluft erfolgt in erster Linie die Entfernung der Flugascheablagerung in den Waben. Die freien Strömungsquerschnitte werden wieder hergestellt und zudem wird vermieden, daß sich bei der nachfolgenden naßchemischen Behandlung der Katalysatorelemente Vermörtelungen und damit Ablagerungen auf den Reaktionsoberflächen der Katalysatoren bilden.

Die Behandlung der Katalysatorelemente mit Druckluft erfolgt zweckmäßigerweise zunächst auf der Anström- und dann auf der Abströmseite jedes einzelnen Katalysatorelementes in horizontaler Lage. In Versuchen bei der Anmelderin wurde zur Reinigung eine Druckluft von etwa 5 bar verwendet.

Die derart von Flugasche befreiten Katalysatorelemente werden nach dem erfindungsgemäßen Verfahren anschließend in einer zweiten Reinigungsstufe mit voll entsalztem Wasser behandelt. Es hat sich gezeigt, daß durch eine derartige Behandlung desaktivierende Alkali- bzw. Erdalkaliverbindungen, wie Natriumoxid, Kaliumoxid oder auch Calciumsulfat chemisch bzw. hydromechanisch gelöst und aus dem Katalysatorelement herausgespült werden können. Aufgrund des ebenfalls im aktiven Oberflächenbereich der Katalysatorelemente vorhandenen SO₃ bildet sich bei der naßchemischen Behandlung schweflige beziehungsweise Schwefelsäure, die dann z. B. mit den genannten Alkalioxiden entsprechend reagiert.

Nach einem weiteren Merkmal des erfindungsgemäßen Verfahrens erfolgt die naßchemische Behandlung zweckmäßigerweise in zwei Stufen, wobei in einer ersten Stufe die Katalysatorelemente mittels voll entsalztem Wasser zunächst ausgespritzt und dann in einer zweiten Stufe mit ebenfalls voll entsalztem Druckwasser nachgespült werden. Dabei finden in der ersten Behandlungsstufe im wesentlichen die vome erwähnten chemischen Reaktionen zur Lösung der abgelagerten Stoffe statt, während in der zweiten Behandlungsstufe diese dann aus den Elementen herausgespült werden.

Die zeitliche Dauer der genannten naßchemischen Reinigungsstufen läßt sich in einfacher Weise über den pH-Wert des jeweils anfallenden Eluats einstellen. Es hat sich nämlich gezeigt, daß der pH-Wert des Eluats während der ersten Reinigungsstufe kontinuierlich ansteigt, beispielsweise von einem Ausgangswert 2,0 auf einen Endwert 2,7, was eindeutig auf die erwähnten chemischen Reaktionen auf der Wabenoberfläche hindeutet. Nach Erreichen des konstanten Endwertes kann dann auf die zweite Reinigungsstufe umgestellt werden. In dieser Reinigungsstufe sinkt der pH-Wert des Eluats dann wieder ab von beispielsweise 2,7 auf konstant 1,5, womit das Ende der Reinigung erreicht ist.

Optimale Ergebnisse lassen sich erzielen, wenn die zweitstufige naßchemische Reinigung der Katalysatorelemente sowohl in deren Anström- als auch in deren Abströmbereich entsprechend durchgeführt wird. Die durchschnittlichen Behandlungszeiten liegen dabei, wie sich gezeigt hat, bei etwa dreißig Minuten pro Anströmbereich und Reinigungsschritt.

In der dritten Reinigungsstufe des erfindungsgemäßen Verfahrens erfolgt schließlich die Trocknung der zunächst mechanisch und dann naßchemisch behandelten Katalysatorelemente mittels öl- und wasserfreier Druckluft.
Zweckmäßigerweise erfolgt auch die Trocknung in zwei Stufen, wobei zunächst in einer ersten Trocknungsstufe mittels Druckluft die freie Feuchte auf der inneren Oberfläche der Katalysatorelemente entfernt wird und dann in einer zweiten Trocknungsstufe mittels eines warmen Luftstromes die weitere Trocknung erfolgt.
In den von der Anmelderin durchgeführten Versuchen wurden in der ersten Trocknungsstufe die Druckluft (ca. 5 bar) über einen Zeitraum von etwa dreißig Minuten eingesetzt, während dann in der zweiten Behandlungsstufe die Katalysatorelemente mit einem warmen Luftstrom mit einer Temperatur von rund 55° C etwa vierundzwanzig Stunden behandelt wurden.

Wie bereits erwähnt, konnte durch die erfindungsgemäße Behandlung die Aktivität der verbrauchten Katalysatorelemente von weniger als 50 % der Ursprungsaktivität auf mehr als 83 % der Ursprungsaktivität erneut angehoben werden. Die chemische Untersuchung einer behandelten Wabe hat gezeigt, daß die desaktivierende Oberflächensperrschicht nahezu vollständig entfernt werden konnte. Auch wurden die Alkali- und Erdalkalielemente an der Oberfläche deutlich minimiert. Dabei blieben die Konzentration der aktiven Katalysatorelemente Vanadiumpentoxid und Wolframdioxid und die saure Wabenoberfläche erhalten. Die Untersuchung der chemischen Zusammensetzung des Katalysatormaterials ergab auch, daß durch das Waschen der Waben keine Katalysatorgifte in das innere Gefüge diffundiert sind.

Das Vortrocknen der Katalysatorelemente auf eine nur noch geringe Mindestrestfeuchte hat zudem den Vorteil, daß bei Wiederinbetriebnahme des Blockes keine zeitliche Verzögerung infolge Nachtrocknung der reaktivierten Katalysatorelemente und somit kein erhöhter Anfahrwärmeverbrauch aufgrund einer zusätzlichen Trocknung auftritt. Erste Meßwerte bei Vollastbetrieb zeigen, daß bereits in der neu aktivierten ersten Katalysatorlage in Strömungsrichtung des Rauchgases ca. 90 % der chemischen Reduktion von Noₓ zu N₂ abläuft.

Der weitgehende Erhalt des aktiven Katalysatormaterials bei der erfindungsgemäßen Behandlung läßt ein mehrmaliges Reinigen der Katalysatorelemente bis zu deren mechanischem Verschleiß zu.

## Patentansprüche

1. Verfahren zur erneuten Aktivierung wabenförmig aufgebauter Katalysatorelemente für die Entstickung von Rauchgasen aus fossil befeuerten Kesselanlagen, insbesondere aus kohlebefeuerten Großkraftwerkskesselanlagen, bei dem die Katalysatorelemente zunächst einer mechanischen Reinigung, anschließend einer zweistufigen naßchemischen Reinigung mittels Wasser und dann einer Trocknung mittels Luft unterzogen werden,
**dadurch gekennzeichnet,**
**daß** jedes Katalysatorelement in ausgebautem Zustand einzeln behandelt wird, wobei die mechanische Reinigung mittels öl- und wasserfreier Druckluft erfolgt und die naßchemische Reinigung mittels voll entsalztem Wasser durchgeführt wird, wobei in einer ersten Stufe jedes Katalysatorelement mittels voll entsalztem Wasser ausgespritzt und dann in einer zweiten Stufe mittels voll entsalztem Druckwasser nachgespült wird.

2. Verfahren nach Anspruch 1,
**dadurch gekennzeichnet,**
**daß** die mechanische Reinigung und/oder die naßchemische Reinigung jedes Katalysatorelementes sowohl auf dessen Anström- als auch auf dessen Abströmseite durchgeführt wird.

3. Verfahren nach den Ansprüchen 1 oder 2,
**dadurch gekennzeichnet,**
**daß** die zeitliche Dauer zumindest der ersten naßchemischen Reinigungsstufe über pH-Wert des anfallenden Eluats eingestellt wird.

4. Verfahren nach einem der Ansprüche 1 bis 3,
**dadurch gekennzeichnet,**
**daß** die Trocknung der Katalysatorelemente zweistufig erfolgt, wobei in einer ersten Trocknungsstufe mittels Druckluft zunächst die freie Feuchte auf der inneren Oberfläche der Katalysatorelemente entfernt wird und dann in einer zweiten Trocknungsstufe mittels eines warmem Luftstromes die Trocknung erfolgt.

## Claims

1. Method for reactivation of catalyst elements of honeycomb construction for removing nitrogen from flue gases from fossil fuel-fired boiler installations, in particular from coal-fired power station boiler installations, wherein the catalyst elements undergo firstly mechanical cleaning, then two-stage wet chemical cleaning by means of water and then drying by means of. air,
**characterised in that**
each catalyst element is treated individually while removed, the mechanical cleaning being carried out by means of compressed air free of oil and water and the wet chemical cleaning by means of fully demineralised water, whereby in a first stage each catalyst element is sprayed by means of fully demineralised water and then in a second stage is rinsed out by means of fully demineralised pressurised water.

2. Method according to claim 1,
**characterised in that**
the mechanical cleaning and/or the wet chemical cleaning of each catalyst element is carried out both on its inlet and on its outlet side.

3. Method according to claims 1 or 2,
**characterised in that**
the duration of at least the first wet chemical cleaning stage is set by means of the pH value of the eluate produced.

4. Method according to one of claims 1 to 3,
**characterised in that**
the drying of the catalyst elements is carried out in two stages, whereby in a first drying stage first the free moisture on the inner surface of the catalyst elements is removed by means of compressed air and then in a second drying stage the drying is carried out by means of a stream of warm air.

## Revendications

1. Procédé d'activation renouvelée d'éléments de catalyseur constitués sous forme alvéolaire, pour la dénitrification de gaz de fumée à partir d'installations de chaudières alimentées avec des combustibles fossiles, en particulier des installations de chaudières de centrale à grande puissance, dans lequel les éléments de catalyseur sont soumis en premier lieu à une purification mécanique, ensuite à une purification chimique à l'état humide en deux étapes à l'aide d'eau, et ensuite à un séchage à l'aide d'air,
**caractérisé en ce que**
chaque élément de catalyseur à l'état démonté est traité isolément, la purification chimique s'effectuant à l'aide d'air comprimé dépourvu d'huile et d'eau, et la purification chimique à l'état humide est exécutée à l'aide d'eau complètement déminéralisée, en pulvérisant complètement à la première étape chaque élément de catalyseur à l'aide d'eau complètement déminéralisée, et ensuite en rinçant finalement dans une deuxième étape à l'aide d'eau sous pression complètement déminéralisée.

2. Procédé selon la revendication 1,
**caractérisé en ce que**
la purification mécanique et/ou la purification chimique à l'état humide de chaque élément de catalyseur, est effectuée aussi bien sur son côté d'afflux que sur son côté d'échappement.

3. Procédé selon les revendications 1 ou 2,
**caractérisé en ce que**
la durée dans le temps d'au moins la première étape de purification chimique à l'état humide est ajustée par l'intermédiaire de la valeur du pH de l'éluat qui est obtenu.

4. Procédé selon l'une quelconque des revendications 1 à 3,
**caractérisé en ce que**
le séchage des éléments de catalyseur s'effectue en deux étapes dans lesquelles dans une première étape de séchage à l'aide d'air comprimé, on élimine en premier lieu l'humidité libre sur la surface intérieure des éléments de catalyseur et ensuite on effectue le séchage dans une deuxième étape de séchage à l'aide d'un courant d'air chaud.
